# EUROPÄISCHE PATENTSCHRIFT

(11) **EP 3 930 885 B1**
(45) Veröffentlichungstag und Bekanntmachung des Hinweises auf die Patenterteilung: **14.08.2024**
(21) Anmeldenummer: 20726015.9
(22) Anmeldetag: 08.05.2020
(51) Int. Cl.: B01J 6/00, B01J 8/08, B01J 8/16, B01J 19/24

(54) **VORRICHTUNG ZUR THERMISCHEN BEHANDLUNG EINES ROHSTOFFS IN EINEM PULSIERENDEN HEISSGASSTROM**
DEVICE FOR THERMALLY TREATING A RAW MATERIAL IN A PULSATING HOT GAS FLOW
DISPOSITIF DE TRAITEMENT THERMIQUE D'UNE MATIÈRE PREMIÈRE DANS UN COURANT DE GAZ CHAUD PULSÉ

(30) Priorität: 09.05.2019 DE 102019206727
(43) Veröffentlichungstag der Anmeldung: 05.01.2022
(73) Patentinhaber: IBU-tec advanced materials AG, 99425 Weimar (DE)
(72) Erfinder: KLAUS, Christian, 07743 Jena (DE); OMMER, Matthias, 07749 Jena (DE); GABERS, Johannes, 99425 Weimar (DE)
(74) Vertreter: Liedtke & Partner Patentanwälte
(86) Internationale Anmeldenummer: PCT/EP2020/062896
(87) Internationale Veröffentlichungsnummer: WO 2020/225425

(56) Entgegenhaltungen:
- EP-A1- 2 092 976
- EP-A1- 3 091 281
- EP-A2- 0 855 215
- DE-A1- 10 236 991
- GB-A- 192 089
- US-A- 5 380 190

## Beschreibung

Die Erfindung betrifft eine Vorrichtung zur thermischen Behandlung eines Rohstoffs in einem pulsierenden Heißgasstrom.

Vorrichtungen zur thermischen Behandlung eines Rohstoffs in einem pulsierenden Heißgasstrom sind beispielsweise Pulsationsreaktoren, wie sie in der WO 02/072471 A1 oder der DE 10 2004 044 266 A1 beschrieben sind.

EP 2 092 976 A1 beschreibt ein Verfahren zur Herstellung von feinteiligen Partikeln in einem pulsierenden Heißgasstrom einer Brennkammer, bei dem die Partikel durch Zuführung einer Rohstoffmischung in den pulsierenden Heißgasstrom, der durch eine Brennerflamme eines Brenners mit periodischer Druckschwingung mit variabel einstellbaren Druckamplituden und Schwingungsfrequenz erzeugt wird, gebildet und in einem der Brennkammer nachgeordneten Filtersystem (Abscheideinrichtung) vom Heißgasstrom abgetrennt werden.

EP 0 855 215 A2 beschreibt, dass Wärme- und/oder Stoffaustausch in einem verfahrenstechnischen System durchgeführt werden, das einen mit einer Zufuhrleitung versehenen Behälter aufweist, der Medien unterschiedlichen Aggregatszustandes enthält. Den Medien werden mittels eines Pulsators Pulsationen aufgezwungen. Dem Behälter ist ein in der Zufuhrleitung des fluiden Mediums zum Behälter liegendes Sperrorgan vorgeschaltet, das den Eintritt der Pulsationen in die Zufuhrleitung zumindest weitgehend verhindert. Zur Verbesserung des Wärme- und/oder Stoffaustauschs, werden:
a) die Pulsationen dem Hauptstrom des Fluids aufgezwungen,
b) die Pulsationsfrequenz wird maximal der halben Resonanzfrequenz des Systems nach Maßgabe der Raumform des Behälters, der Temperatur und der Eigenschaften der Medien gewählt, und
c) die Antinode (Schwingungsbauch) der sich ausbildenden stehenden Welle wird zumindest angenähert in der Behältermitte eingestellt.

Dadurch wird im Behälter kein Schwingungsknoten ausgebildet. Vorzugsweise wird die Pulsationsfrequenz zu 1/4 der Resonanzfrequenz des Systems gewählt.

DE 102 36 991 A1 beschreibt ein Verfahren zur Trocknung bzw. zur Realisierung von anderen thermischen Behandlungsprozessen, beispielsweise Erwärmen, Glühen, Kalzinieren, Bedampfen, Kühlen und dgl., von feinkörnigen Gütern, insbesondere Schüttgütern in Form von Feinststäuben oder nanoskaligen Produkten. Darüber hinaus wird eine Vorrichtung zur Verfahrensdurchführung angegeben. Das als gasdurchströmte Schüttschicht im Arbeitsraum eines Behandlungsapparates vorliegende zu behandelnde Gut wird in einen schwingenden Bearbeitungszustand versetzt. Die Schwingungen gehen von einem Schwingsystem aus, das periodische Druckschwankungen im Arbeitsraum des Behandlungsapparates bewirkt. Die strömende Gassäule überträgt die Schwingungen auf die Schüttschicht, so dass diese in Resonanz mitschwingt. Dieser Zustand äußert sich darin, dass das feinkörnige Gut einen ähnlichen Bewegungszustand wie siedendes Wasser annimmt. Es entsteht ein "sprudelndes" Festbett. Als wesentliches Vorrichtungsmerkmal ist in Strömungsrichtung nach der Schüttschicht ein Schwingsystem an den Gasweg angeschlossen, das in der strömenden Gassäule wechselweise den Druck erhöht und absenkt. Das Schwingsystem ist so ausgelegt, dass sowohl Amplitude als auch Frequenz der Schwingung stufenlos einstellbar sind.

Pulsationsreaktoren dienen beispielsweise einer thermischen Behandlung eines Rohstoffs, insbesondere zur Herstellung von feinteiligen Partikeln, insbesondere feinteiligen Materialien, wie zum Beispiel Nanopartikeln, oder einer thermischen Synthese eines Rohstoffs, wie der Trocknung, Kalzinierung von Rohstoffen.

Der Erfindung liegt die Aufgabe zu Grunde, eine verbesserte Vorrichtung zur thermischen Behandlung eines Rohstoffs in einem pulsierenden Heißgasstrom anzugeben.

Die Aufgabe wird erfindungsgemäß gelöst durch die Merkmale des Patentanspruchs 1.

Vorteilhafte Ausgestaltungen der Erfindung sind Gegenstand der Unteransprüche.

Die erfindungsgemäße Vorrichtung zur thermischen Behandlung eines Rohstoffs, insbesondere zur Herstellung feinteiliger Partikel, in einem pulsierenden Heißgasstrom umfasst mindestens ein Erzeuger eines Heißgasstroms oder des pulsierenden Heißgasstroms und zumindest einen Applikationsraum sowie einen in Strömungsrichtung nachfolgenden Reaktionsraum, in den der Heißgasstrom oder der pulsierende Heißgasstrom strömt, wobei mindestens ein Pulsator vorgesehen ist, der von außen an den Reaktionsraum gekoppelt ist und mindestens eine Druckschwingung dem Heißgasstrom zur Erzeugung des pulsierenden Heißgasstroms im Reaktionsraum oder dem pulsierenden Heißgasstrom unter Ausbildung einer konstruktiven Interferenz im Reaktionsraum aufprägt. Insbesondere umfasst die Vorrichtung einen sich an den Erzeuger anschließenden Applikationsraum sowie einen sich an den Applikationsraum anschließenden Reaktionsraum.

Unter feinteiligen, insbesondere nanoskaligen Partikeln, die in der zuvor beschriebenen Vorrichtung hergestellt werden, werden insbesondere Partikel im Nanobereich gemäß DIN SPEC 1121 (DIN ISO/TS 27687) verstanden, die beispielsweise Korn- oder Partikelgrößen im Bereich von 10 nm bis 120 nm, insbesondere im Bereich von 20 nm bis 100 nm, beispielsweise von 40 nm bis 80 nm, aufweisen. Unter feinteiligen, insbesondere nanokristallinen Partikeln, die in der zuvor beschriebenen Vorrichtung hergestellt werden, werden insbesondere Partikel verstanden, deren Korn aus mehreren kleinen Kristallen gebildet ist und eine Korn- oder Partikelgröße von wenigen Millimetern, insbesondere von kleiner 8 mm, insbesondere kleiner 5 mm oder 3 mm, aufweisen. Auch können unter feinteiligen Partikeln nanokristalline Partikel mit einer Partikelgröße von < 20 µm verstanden werden. Darüber hinaus kann verstanden werden, dass Nanopartikel, insbesondere so genannte nanoskalige Partikel, auf Partikelgrößen im Nanobereich bezogen sind, wobei nanokristalline Partikel eine im Vergleich größere Partikelgröße aufweisen können. Die nanokristallinen Partikel kennzeichnen sich durch beispielsweise eine polykristalline Struktur, bei welcher die Kristalle Größenanordnungen im Nanobereich aufweisen können. Diese Stoffe können ebenso differenzierte Eigenschaften aufweisen. Insbesondere sind beide Partikelarten abhängig vom Eingangsmaterial erzeugbar.

Unter dem Reaktionsraum wird insbesondere jenes Anlagen- oder Reaktorraumvolumen, wie beispielsweise Rohr-, Behälter- und/oder Leitungsvolumen, vom Aufgabeort des Rohstoffs bzw. Materials bis hin zur Abkühlung des Rohstoffs bzw. Materials vor einer Abscheidung oder einem Filtern der hergestellten Partikel verstanden. Wird nach einer möglichen Ausgestaltung der Vorrichtung der Rohstoff oder das Material in ein Volumen größeren Durchmessers strömungsseitig vor dem Reaktionsraum aufgegeben, insbesondere in einen Applikationsraum oder befindet sich ein Aufgabeort an einem Volumen größeren Durchmessers strömungsseitig vor dem Reaktionsraum, so ist auch dieses Volumen als Reaktionsraum anzusehen.

Der Rohstoff oder ein Rohmaterial wird beispielsweise in Form eines Feststoffs, einer Lösung oder Suspension aufgegeben. Dabei kann die Aufgabe des Rohstoffs je nach Ausführung an unterschiedlichen Aufgabeorten in den Applikationsraum und/oder den Reaktionsraum erfolgen.

Die thermische Behandlung des Rohstoffs bzw. -materials in der Vorrichtung ist durch eine relativ kurze Verweilzeit in der Vorrichtung und eine dabei in kurzer Zeit stattfindende Erhitzung und Abkühlung des Rohstoffs bzw. -materials gekennzeichnet. Aufgrund der Pulsation des Heißgasstroms wird hierbei ein besonders hoher Stoff- und Wärmetransport erreicht.

Gemäß einer möglichen Ausgestaltung der Vorrichtung ist der Erzeuger des pulsierenden Heißgasstroms ein Brenner und der sich an den Erzeuger anschließende Applikationsraum ist eine Brennkammer. In einer alternativen Ausgestaltung ist der Erzeuger ein Wärmeübertrager oder eine elektrische Heizung, welcher bzw. welche zunächst einen Heißgasstrom erzeugt. Der Wärmeübertrager oder die elektrische Heizung ist strömungsausgangsseitig mit dem Applikationsraum verbunden. Zur Erzeugung des pulsierenden Heißgasstroms wird bzw. werden dann der eine oder die mehreren Pulsatoren verwendet. Hierzu wird dem erzeugten Heißgasstrom stromab des Applikationsraums mittels des mindestens einen Pulsators eine Druckschwingung zur Erzeugung des pulsierenden Heißgasstroms im Reaktionsraum aufgeprägt. Diesem Pulsator können weitere Pulsatoren nachgeschaltet sein, welche stromab dem pulsierenden Heißgasstrom weitere Druckschwingungen zur Schwingungsverstärkung, Schwingungsdämpfung und/oder Schwingungsauslöschung aufprägen. Denkbar ist ebenfalls ein Erzeuger, umfassend eine Kombination aus Brenner, Brennkammer und Pulsator. Wird kein Brenner mit Brennkammer genutzt, so kann ein Volumen mit einem größeren Durchmesser, insbesondere der Applikationsraum, dem Reaktionsraum vorgeschaltet werden.

Gemäß einer möglichen Ausgestaltung der Vorrichtung umfasst die Reaktionsraumanordnung einen als Resonanzrohr ausgebildeten Reaktionsraum. Beispielsweise umfasst das Resonanzrohr einen kreisrunden Querschnitt, wodurch insbesondere eine gleichmäßige Zerstäubung des zuzuführenden Materials im Heißgasstrom und eine besonders gleichmäßige Temperaturverteilung über den Querschnitt ermöglicht werden kann. Insbesondere weist der als Resonanzrohr ausgebildete Reaktionsraum einen gegenüber dem Applikationsraum, z. B. der Brennkammer, kleineren Durchmesser auf. Beispielsweise sind der Applikationsraum, beispielsweise die Brennkammer, und der Reaktionsraum hohlzylinderförmig ausgebildet. Bei der Auswahl bestimmter Geometrien des Applikationsraumes, insbesondere der Brennkammer, und des Reaktionsraumes, insbesondere des Resonanzrohres, kann die Pulsation des Heißgasstromes verstärkt werden. Beispielsweise weist das Resonanzrohr ein größeres Raumvolumen auf als ein Raumvolumen des Applikationsraumes und/oder der Brennkammer.

Zur Abscheidung der Partikel als Reaktionsprodukt aus dem Heißgasstrom ist gemäß einer möglichen Weiterbildung dem Reaktionsraum eine geeignete Abscheidevorrichtung für feinteilige Partikel nachgeschaltet.

In einer weiteren möglichen Ausgestaltung der Vorrichtung ist vorgesehen, dass der Abscheidevorrichtung eine Abgasnachbehandlung, welche beispielsweise zumindest einen Wäscher und zumindest ein Gebläse umfasst, nachgeschaltet ist, mittels welcher eine Reinigung eines entstehenden Abgases realisiert werden kann. Die Reinigung kann alternativ auch mittels einer sogenannten Rauchgasentstickung erfolgen, bei welcher mittels bestimmter Maßnahmen Stickstoffmonoxid und Stickstoffoxide aus dem Abgas entfernt werden. Letzteres ist auch als sogenannte Denox-Anlage bekannt.

In einer möglichen Ausführungsform ist der Pulsator mittels einer Rohreinrichtung mit dem Reaktionsraum gekoppelt. Dabei kann die Rohreinrichtung zumindest bereichsweise in den Reaktionsraum hineinragen.

Eine Weiterbildung sieht vor, dass der Pulsator als ein elektromechanischer Wandler zur Erzeugung der frequenzvariablen Druckschwingung ausgebildet ist. Dabei kann der Pulsator eingerichtet sein, Frequenz, Phase und/oder Amplitude der Druckschwingung zu variieren.

Beispielsweise umfasst der Pulsator eine Membran, die in einem Übergangsbereich zwischen Pulsator und Reaktionsraum angeordnet ist. Dabei kann die Membran als ein flexibler Wandbereich des Reaktionsraums ausgebildet sein. Darüber hinaus kann der Pulsator eine Zylinder-Kolben-Einrichtung umfassen. In einer alternativen Ausführungsform kann der Pulsator eine Verschlussblende umfassen. Dabei kann die Verschlussblende in eine Wand des Reaktionsraums eingebracht sein.

Eine weitere Ausführungsform sieht vor, dass mehrere Pulsatoren an den Reaktionsraum gekoppelt sind. Mittels mindestens eines weiteren Pulsators kann zumindest eine weitere Druckschwingung dem pulsierenden Heißgasstrom im Reaktionsraum aufgeprägt werden. Die zumindest eine weitere Druckschwingung ist mittels zumindest eines weiteren Pulsators unter Ausbildung zumindest einer weiteren konstruktiven Interferenz oder unter Ausbildung einer destruktiven Interferenz in den Reaktionsraum einkoppelbar. Dabei können die Druckschwingungen mittels der Pulsatoren jeweils unter Ausbildung einer konstruktiven Interferenz oder unter Ausbildung einer destruktiven Interferenz bis hin zur Auslöschung in den Reaktionsraum eingekoppelt werden. Insbesondere können die Pulsatoren über destruktive und/oder konstruktive Interferenz die Pulsation des Heißgasstroms entlang des Reaktors, insbesondere entlang des Resonanzrohres, ortsbezogen verstärken und/oder abschwächen und gegebenenfalls auslöschen. Dadurch kann die Pulsation, welche durch Materialpartikel im Heißgasstrom stromab gedämpft wird, erneut verstärkt und/oder gedämpft werden. Ebenso kann die Pulsation des Heißgasstroms an einem definierten Ort des Reaktionsraumes, insbesondere an einem stromab gelegenen Ort, erneut verstärkt, gedämpft oder gar ausgelöscht werden. Dies ist auch unter der sogenannten Antischalltechnologie aus der Kopfhörerentwicklung bekannt.

Mittels der Vorrichtung wird der Heißgasstrom mit dem Rohstoff in den Reaktionsraum und optional in einen weiteren Reaktionsraum, welcher dem Reaktionsraum nachgeschaltet ist, geleitet und dort thermisch behandelt. Aufgrund der Behandlung des Rohstoffs in mehreren Reaktionsräumen wird eine verlängerte Verweilzeit des Heißgasstroms mit dem Rohstoff in dem Reaktionsraum erzielt.

In dem Reaktionsraum wird eine Prozesstemperatur im Bereich von 300 °C bis 1000 °C, beispielsweise von 600 °C bis 900 °C, beispielsweise von 700 °C bis 900 °C, beispielsweise von 700 °C bis 800 °C, eingestellt. Die Einstellung der Prozesstemperatur erfolgt beispielsweise anhand einer Einstellung eines Luft-Brennstoffgemisches am Eingang des Brenners oder über die Wärmeübertragung an ein Reaktionsgas.

Möglich ist auch, dass der Heißgasstrom mit den aus dem Rohstoff gebildeten Partikeln nach Durchströmung des Reaktionsraums gekühlt wird und anschließend der Abscheidevorrichtung zur Trennung der Partikel aus dem Heißgasstrom zugeführt wird. Somit können feinteilige Partikel oder abgeschieden werden.

Eine mögliche Weiterbildung des Verfahrens sieht vor, dass der Heißgasstrom nach der Abscheidung und/oder einer Reinigung als Reaktionsgas in den Reaktor zugeführt wird. Somit kann eine Reinigung eines entstehenden Abgases realisiert werden.

Ausführungsbeispiele der Erfindung werden im Folgenden anhand von Zeichnungen näher erläutert.

Darin zeigen:
- Figur 1: schematisch ein Ausführungsbeispiel für eine Vorrichtung zur thermischen Behandlung eines Rohstoffs mit einem Reaktionsraum, an welchen ein Pulsator gekoppelt ist,
- Figur 2: schematisch ein weiteres Ausführungsbeispiel für eine Vorrichtung zur thermischen Behandlung eines Rohstoffs mit einem Reaktionsraum, an welchen mehrere Pulsatoren gekoppelt sind, und
- Figuren 3A, 3B: schematisch weitere alternative Ausführungsformen für einen Erzeuger eines Heißgasstromes der Vorrichtung zur thermischen Behandlung eines Rohstoffs mit einem Reaktionsraum.

Einander entsprechende Teile sind in allen Figuren mit den gleichen Bezugszeichen versehen.

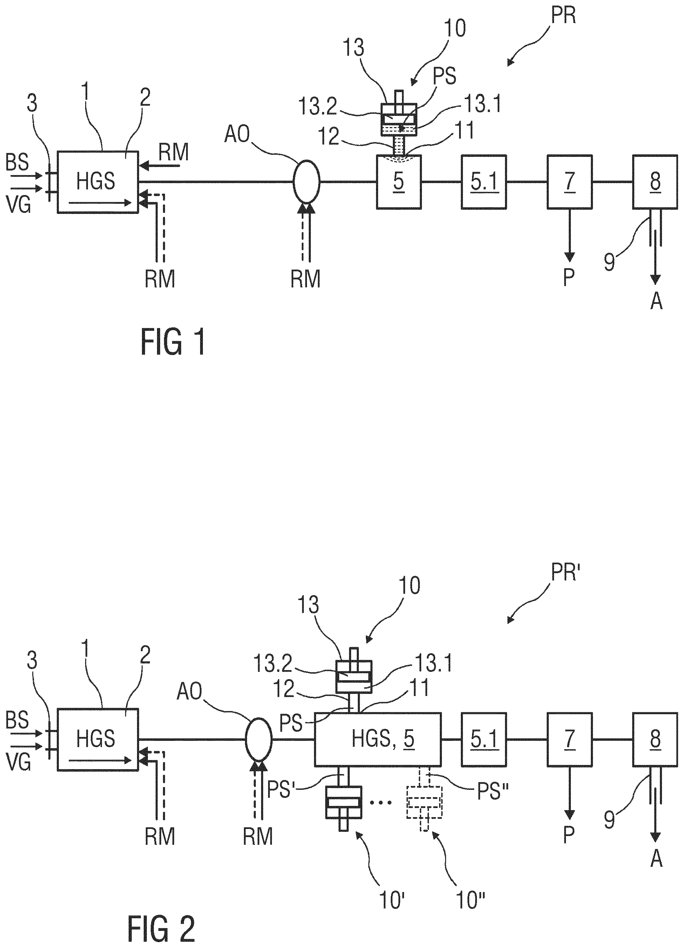

**Figur** 1 zeigt ein Ausführungsbeispiel für eine Vorrichtung PR, insbesondere einen thermischen Reaktor, zur thermischen Behandlung eines Rohstoffs RM.

Der thermische Reaktor ist beispielsweise ein Pulsationsreaktor, in welchem in einem pulsierenden Heißgasstrom HGS aus dem Rohstoff RM Partikel P, insbesondere feinteilige Partikel mit einer mittleren Partikelgröße oder Korngröße in einem Bereich von kleiner 10 nm bis wenige Millimeter, gebildet werden.

Die Vorrichtung PR wird dabei zu einer thermischen Behandlung des Rohstoffs RM, insbesondere zur Herstellung von feinteiligen Partikeln P aus dem Rohstoff RM, wie zum Beispiel Nanopartikeln, oder zu einer thermischen Synthese des Rohstoffs RM, wie der Trocknung oder Kalzinierung von Rohstoffen RM, verwendet.

Die Vorrichtung PR ist ein thermischer Reaktor, insbesondere ein Pulsationsreaktor, in welchem in einem pulsierenden, schwingenden Heißgasstrom HGS aus dem Rohstoff RM die Partikel P gebildet werden. Hierzu umfasst die Vorrichtung PR einen Erzeuger 1 zur Erzeugung des pulsierenden Heißgasstroms HGS. Der Erzeuger 1 ist beispielsweise ein Brenner mit einem sich dem Brenner anschließenden Applikationsraum 2, z. B. eine Brennkammer, und/oder eine andere technische Umsetzung zur Erwärmung des Heißgasstroms HGS in Kombination mit dem Applikationsraum 2. Des Weiteren umfasst die Vorrichtung PR zumindest einen Pulsator 10, welcher an einem Reaktionsraum 5, welcher dem Applikationsraum 2 nachgeschaltet ist, angeordnet ist. In einer möglichen Ausführung kann der Heißgasstrom HGS auch mittels eines Wärmeübertragers oder elektrisch erwärmt werden. Der pulsierende Heißgasstrom HGS strömt dabei vom Applikationsraum 2 in den nachgeschalteten Reaktionsraum 5. Die Vorrichtung PR umfasst den mindestens einen Pulsator 10, der von außen an den Reaktionsraum 5 gekoppelt ist und welcher mindestens eine (schematisch angedeutete) Druckschwingung PS dem pulsierenden Heißgasstrom HGS im Reaktionsraum 5 aufprägt.

Bei der Verwendung eines Brenners als Erzeuger 1 werden im Detail Verbrennungsgase VG und zumindest ein Brennstoff BS über eine Zuführung 3 gemeinsam oder separat in den Brenner und über diesen in die Brennkammer eingebracht.

Als Brennstoff BS wird insbesondere ein brennbares Gas, wie zum Beispiel Erdgas und/oder Wasserstoff, zugeführt. Auch kann ein anderes geeignetes Gas als Brenngas zugeführt werden.

Als Verbrennungsgas VG wird zum Beispiel Umgebungsluft, Sauerstoff, etc. verwendet. Die zugeführten Verbrennungsgase VG und Brennstoffe BS werden beispielsweise im Applikationsraum, insbesondere in der Brennkammer gezündet. Die daraus resultierende Flamme pulsiert aufgrund einer selbsterregten periodisch-instationären Verbrennung im Applikationsraum 2 und erzeugt den pulsierenden Heißgasstrom HGS im Applikationsraum 2. Der pulsierende Heißgasstrom HGS strömt vom Applikationsraum 2 strömungsausgangsseitig in den Reaktionsraum 5. Der Reaktionsraum 5 ist beispielsweise als ein Resonanzrohr ausgebildet. Dem Reaktionsraum 5 kann optional ein weiterer Reaktionsraum 5.1 nachgeschaltet sein. Der Reaktionsraum 5 kennzeichnet dabei einen Bereich der Vorrichtung PR, welcher sich von der Zuführung 3 bis zumindest zum Ende des als Resonanzrohr ausgebildeten Reaktionsraums 5 erstreckt und in welchem der Rohstoff RM thermisch behandelt wird und die Partikel P gebildet werden.

Im Detail werden der Brennstoff BS sowie das notwendige Verbrennungsgas VG gemeinsam (beispielsweise vorgemischt in einer vorgeschalteten Mischkammer) oder getrennt über den Erzeuger 1, insbesondere dem Brenner, dem Applikationsraum 2, insbesondere der Brennkammer, zugeführt und dort gezündet. Dabei verbrennen der Brennstoff BS und das Verbrennungsgas VG sehr schnell und erzeugen eine Druckwelle in Richtung des Reaktionsraums 5, beispielsweise in Richtung des Resonanzrohrs. Durch den geringeren Strömungswiderstand in Richtung des Reaktionsraums 5 erfolgt die Ausbreitung einer Druckwelle. Während des akustischen Schwingungsverlaufes wird der Druck im Applikationsraum 2, insbesondere in der Brennkammer reduziert, so dass neues Brenngasgemisch oder neuer Brennstoff BS und Verbrennungsgas VG nachströmen kann bzw. können. Dieser Vorgang des Nachströmens durch Druckschwankungen erfolgt selbstregelnd periodisch.

In einer weiteren möglichen Ausführung wird ein Reaktionsgas, wie zum Beispiel Luft und/oder Stickstoff und/oder Formiergas, einem Wärmeübertrager zugeführt. Dieser erwärmt das Reaktionsgas auf die gewünschte Temperatur und führt es dann dem Applikationsraum 2 zu. Durch eine Verwendung von einem oder mehreren Pulsatoren 10 am Reaktionsraum 5 entsteht so ebenfalls ein pulsierender Heißgasstrom . Hierbei ist die Zusammensetzung des Heißgasstroms nicht an ein Verbrennungsabgas gebunden, sondern kann nahezu frei gewählt werden. Ist somit eine Reaktion im Reaktionsraum 5 unter inerten Bedingungen erforderlich, so kann als Reaktionsgas beispielsweise Stickstoff verwendet werden. Der pulsierende Heißgasstrom HGS besteht somit auch nur aus Stickstoff.

Die pulsierende Heißgasströmung HGS ist durch einen hohen Turbulenzgrad gekennzeichnet. Die hohe Strömungsturbulenz und die sich stetig wechselnde Strömungsgeschwindigkeit verhindern den Aufbau einer isolierenden Gashülle (Grenzschicht) um die sich aus dem Rohstoff RM, insbesondere eine Rohstoffmischung, bildenden Partikel P, wodurch ein höherer Wärmeübertrag und Stofftransport (zwischen Rohstoff RM und Heißgas), das heißt eine schnellere Reaktion bei vergleichsweise niedrigeren Temperaturen, möglich ist. Typischerweise liegt die Verweilzeit bei weniger als einer Sekunde bis wenige Sekunden. Zudem erreicht ein besonders großer Anteil der gebildeten Partikel P eine gewünschte sphärische Form. Zur Abscheidung der Partikel P als Reaktionsprodukt aus dem Heißgasstrom HGS schließt sich an den Reaktionsraum 5 eine geeignete Abscheidevorrichtung 7 für feinteilige Partikel P an.

Die Frequenz des pulsierenden Heißgasstroms HGS liegt dabei im Hertz-Bereich, insbesondere in einem Bereich von wenigen Hertz, beispielsweise von größer 5 Hz, insbesondere größer 50 Hz, beispielsweise in einem Bereich von 5 Hz bis 350 Hz. Parameter des Heißgasstroms HGS, wie Amplitude, Phase und/oder Frequenz der Schwingung, sind mittels des Pulsators 10 besonders einfach einstellbar. Zudem kann dies über die Verbrennungsparameter, wie Brennstoffmenge, Luftmenge, Lufttemperatur, Brennstofftemperatur und/oder Flammentemperatur, Ort der Brennstoff-/Luftaufgabe und/oder über Proportionen und/oder Änderungen dieser vom Applikationsraum 2, insbesondere Brennkammer, Erzeuger 1, insbesondere Brenner und/oder Reaktionsraum 5 erfolgen.

Der Reaktionsraum 5 ist zum Beispiel als ein Resonanzrohr ausgebildet. Brennt im Applikationsraum 2 eine Flamme, so ist dieser eine Brennkammer. Die Brennkammer ist dann als ein Brennraum ausgebildet, dessen Abmessungen, insbesondere dessen Durchmesser, größer ist als die Abmessungen, insbesondere der Durchmesser des Reaktionsraums 5. Auch der Applikationsraum 2 (ohne Flamme) ist in seinen Abmessungen, insbesondere mit dessen Durchmesser, größer als der Reaktionsraum 5.

In einem Bereich zwischen einem Strömungsausgang des Applikationsraums 2, insbesondere der Brennkammer, und einem Strömungseingang des Reaktionsraums 5 ist ein Aufgabeort AO angeordnet, an welchem eine Aufgabe des Rohstoffs RM, im Folgenden als Rohstoffaufgabe bezeichnet, erfolgt. Hierbei wird der Rohstoff RM in fester, gasförmiger und/oder flüssiger Form als Rohstoffpulver, Rohstofflösung bzw. Rohstoffdispersion eingebracht.

Die Aufgabe des Rohstoffs RM kann beispielsweise an einem oberen Ende des Applikationsraums 2, insbesondere der Brennkammer, insbesondere am Übergang von Brennkammer zum Reaktionsraum 5 und/oder außerhalb der Brennkammer 2 in eine Verbindungsleitung erfolgen. Insbesondere erfolgt die Aufgabe des Rohstoffs RM in den Heißgasstrom HGS durch eine Düse, wenn das Rohstoffmaterial RM als Suspension oder Lösung vorliegt.

Beispielsweise erfolgt die Aufgabe des Rohstoffs RM als Suspension aus dem Rohstoff RM und Wasser mittels einer Zweistoffdüse. Hierbei beträgt ein Feststoffgehalt des Rohstoffs RM in der Suspension beispielsweise 30 %.

Alternativ kann die Aufgabe des Rohstoffmaterials RM auch in Pulverform erfolgen.

Zusätzlich kann der Rohstoff RM aus Richtung der Zuführung 3 in den Applikationsraum 2, insbesondere die Brennkammer eingebracht werden. Alternativ oder zusätzlich kann der Rohstoff RM auch in den sich daran anschließenden angeordneten Reaktionsraum 5, insbesondere in das Resonanzrohr, eingebracht werden. Hierzu kann die Vorrichtung PR weitere nicht näher dargestellte Aufgabeorte AO im Bereich des Applikationsraums 2, insbesondere der Brennkammer, insbesondere am strömungseingangsseitigen Ende, und/oder entlang des Reaktionsraumes 5 aufweisen.

In einer möglichen Weiterbildung ist ein Aufgabeort AO derart im Bereich der Zuführung 3, insbesondere am Ausgang des Erzeugers 1, insbesondere des Brenners, angeordnet, dass der Rohstoff RM am strömungseingangsseitigen Ende des Applikationsraumes 2, insbesondere der Brennkammer eingebracht wird. Dadurch kann ein im Wesentlichen hoher Temperaturgradient erzeugt werden, wobei sich der Rohstoff RM schneller aufheizt. Insbesondere kann eine Erwärmungsgeschwindigkeit durch Anordnung dieses Aufgabeortes AO im Bereich des Brenners und am strömungseingangsseitigen Ende der Brennkammer erhöht werden. Des Weiteren wird ein Verkleben und Haften des Stoffes mittels Einsprühens des Rohstoffs RM, beispielsweise in Form einer Flüssigkeit, in einen offenen Raum weitestgehend verhindert.

Somit kann auch der Applikationsraum 2, insbesondere die Brennkammer selbst einen Reaktionsraum 5 bilden. Im Allgemeinen findet in der Brennkammer die Verbrennung statt und die Erzeugung des pulsierenden Heißgasstroms HGS. Demgegenüber findet in dem Reaktionsraum 5 üblicherweise keine Verbrennung des Brennstoffes BS mehr statt. Es ist aber auch möglich, insbesondere am Eingang des Reaktionsraums 5 und somit im Bereich des oberen Endes der Brennkammer zusätzlich Brennstoff BS und/oder Verbrennungsgas VG als Zwischenfeuerung zuzuführen. Ebenso ist es möglich, in den Applikationsraum 2, insbesondere in die Brennkammer Rohstoff RM über den optionalen Aufgabeort AO im Bereich der Zuführung 3, insbesondere am Ausgang des Erzeugers 1, zuzuführen. In diesem Fall bildet der Applikationsraum 2, insbesondere die Brennkammer auch einen Reaktionsraum 5, da dort ebenfalls Material behandelt wird.

Dem Reaktionsraum 5 ist die Abscheidevorrichtung 7 nachgeschaltet. Der Rohstoff RM wird mittels der Heißgasströmung HGS von der zumindest einen Materialaufgabe über den Reaktionsraum 5 unter Bildung der Partikel P zu der Abscheidevorrichtung 7 geführt und transportiert. Dabei können beispielsweise mittels Kühlluft, insbesondere gefilterter Umgebungsluft, der Heißgasstrom HGS und die darin befindlichen Partikel P vor der Abscheidevorrichtung 7 gekühlt werden. Die Abscheidevorrichtung 7 ist beispielsweise ein Zyklonabscheider oder ein Filter, insbesondere ein Heißgasfilter. Aus der Abscheidevorrichtung 7 werden die gefertigten Partikel P abgeschieden.

Der Abscheidevorrichtung 7 kann optional eine Abgasnachbehandlung 8 nachgeschaltet sein, mittels welcher eine Reinigung eines entstehenden Abgases A erfolgt. Das Abgas A wird anschließend beispielsweise über einen Kamin 9 in die Umgebung zurückgeführt.

In dem pulsierenden Heißgasstrom HGS erfolgt die Partikelbehandlung. Der erzeugte pulsierende Heißgasstrom HGS weist vorzugsweise eine Verbrennungsfrequenz von 5 Hz bis 350 Hz auf. Eine Prozesstemperatur wird beispielsweise im Bereich von 300 °C bis 1000 °C, beispielsweise von 600 °C bis 900 °C, beispielsweise von 700 °C bis 900 °C, beispielsweise von 700 °C bis 800 °C, eingestellt.

Zur Einstellung und Überwachung der Prozessbedingungen werden an verschiedenen Positionen an der Vorrichtung PR Drücke, Temperaturen und Durchflussmengen sowie Betriebsparameter von Komponenten der Vorrichtung PR gemessen.

Die erfindungsgemäße Vorrichtung PR umfasst mindestens einen Pulsator 10, der mindestens eine Druckschwingung PS dem pulsierenden Heißgasstrom HGS im Reaktionsraum 5 aufprägt oder auslöscht.

In einer möglichen Ausführungsform ist der Pulsator 10 mittels einer Rohreinrichtung 11 mit dem Reaktionsraum 5 gekoppelt. Dabei kann die Rohreinrichtung 11 zumindest bereichsweise in den Reaktionsraum 5 hineinragen.

Beispielsweise ist der Pulsator 10 als ein elektromechanischer Wandler zur Erzeugung der frequenzvariablen Druckschwingung PS ausgebildet. Dabei kann der Pulsator 10 eingerichtet sein, Frequenz, Phase und/oder Amplitude der Druckschwingung PS zu variieren. Insbesondere ist der Pulsator 10 ausgebildet, das Volumen, welches sich zwischen einem beispielsweise beweglichen Teil und einer Rohreinrichtung 11 befindet, in Frequenz, Phase und/oder Amplitude zu vergrößern und zu verkleinern.

In einer möglichen Ausführungsform umfasst der Pulsator 10 eine Membran 12, die in einem Übergangsbereich zwischen Pulsator 10 und Reaktionsraum5 angeordnet ist. Dabei kann die Membran 12 als ein flexibler Wandbereich des Reaktionsraums 5 ausgebildet sein, an welchem eine Rohrleitung des Pulsators angeschlossen ist. Die Membran 12 wird zu Schwingungen angeregt, beispielsweise mittels einer Zylinder-Kolben-Einrichtung 13. Durch die schwingende Bewegung der Membran 12 in der Wand des Reaktionsraums 5 wird dem Heißgasstrom HGS im Reaktionsraum 5 infolge von Volumenänderung im Reaktionsraum 5 eine entsprechende Druckschwingung PS aufgeprägt, wodurch die Pulsation des Heißgasstroms HGS verändert wird.

Alternativ kann der Pulsator10 die Zylinder-Kolben-Einrichtung 13 mit einem Strömungsausgang umfassen. Die Zylinder-Kolben-Einrichtung 13 umfasst mindestens einen ein Arbeitsmedium, insbesondere ein Gas, aufnehmenden Zylinder 13.1 mit mindestens einem Kolben 13.2. Der Zylinder 13.1 hat eine Stirnfläche, die den Strömungsausgang in Richtung des Reaktionsraums 5 aufweist. Der Kolben 13.2 wird im Zylinder 13.1 vor- und zurückbewegt, so dass mit ihm in den Zylinderraum das Arbeitsmedium über den Strömungsausgang aus dem Reaktionsraum 5 eingesaugt und über den Strömungsausgang in den Reaktionsraum 5 wieder ausgestoßen wird. Die daraus resultierende Druckschwingung PS wird somit dem Heißgasstrom HGS im Reaktionsraum 5 aufgeprägt. Dabei können über die Hin- und Herbewegung des Kolbens 13.2, die beispielsweise von extern von einem entsprechenden Antrieb, z. B. ein Elektromotor, erfolgt und gesteuert wird, die Frequenz, Phase und/oder die Amplitude der Druckschwingung PS und durch die daraus resultierende Aufprägung der Druckschwingung PS auf den Heißgasstrom HGS dessen Pulsation bedarfsweise geändert oder angepasst werden.

In einer weiteren alternativen Ausführungsform kann der Pulsator 10 eine Verschlussblende oder ein schnell schließendes Ventil umfassen. Dabei kann die Verschlussblende oder das schnellschließende Ventil in eine Wand des Reaktionsraums 5 eingebracht sein. Beispielsweise kann die Verschlussblende oder das schnellschließende Ventil mittels Überdruck eine als Membran ausgebildete Wand des Reaktionsraumes 5 auslenken und so die Pulsation in den Heißgasstrom eingebracht werden. Darüber hinaus kann der Pulsator 10 einen elektrodynamischen Schwinger, auch Shaker genannt, umfassen, welcher die Membran 12 ausgelenkt.

**Figur** 2 zeigt schematisch ein weiteres Ausführungsbeispiel für eine Vorrichtung PR` mit einem Reaktionsraum 5, an welchen mehrere Pulsatoren 10 gekoppelt sind. Dabei können die Pulsatoren 10 entlang der Längsausdehnung des Reaktionsraumes 5 verteilt angeordnet sein. Alternativ können diese symmetrisch um einen Kreisumfang des Reaktionsraumes 5 verteilt angeordnet sein. Durch eine solche mehrfache Aufprägung von Druckschwingungen PS, PS` auf den Heißgasstrom HGS im Reaktionsraum 5 kann die Pulsation des Heißgasstroms HGS entsprechend geändert oder angepasst werden, insbesondere verstärkt, gedämpft und/oder ausgelöscht werden. Beispielsweise kann die Pulsation des Heißgasstroms HGS am stromauf gelegenen Ende des Reaktionsraums 5 durch Aufprägung einer ersten Druckschwingung PS mittels eines ersten Pulsators 10 verstärkt werden und stromab durch Aufprägung mindestens einer weiteren Druckschwingungen PS` und/oder PS" mittels mindestens eines weiteren Pulsators 10' und/oder 10" erneut verstärkt, gedämpft und/oder ausgelöscht werden.

Dabei können die Druckschwingungen PS, PS', PS" mittels der Pulsatoren 10, 10', 10" jeweils unter Ausbildung einer konstruktiven Interferenz und/oder unter Ausbildung einer destruktiven Interferenz bis hin zur Auslöschung in den Reaktionsraum 5, insbesondere entlang des Resonanzrohres, ortsbezogen verstärken und/oder abschwächen und gegebenenfalls auslöschen. Dadurch können die Druckschwingungen PS, PS', PS" die Pulsation, welche durch Materialpartikel im Heißgasstrom gedämpft wird, erneut verstärkt werden. Ebenso kann die zumindest eine weitere Druckschwingung PS` oder PS" die Pulsation des Heißgasstroms HGS an einem definierten Ort des Reaktionsraumes 5 dämpfen oder auslöschen. Dies ist auch unter der sogenannten Antischalltechnologie aus der Kopfhörerentwicklung bekannt.

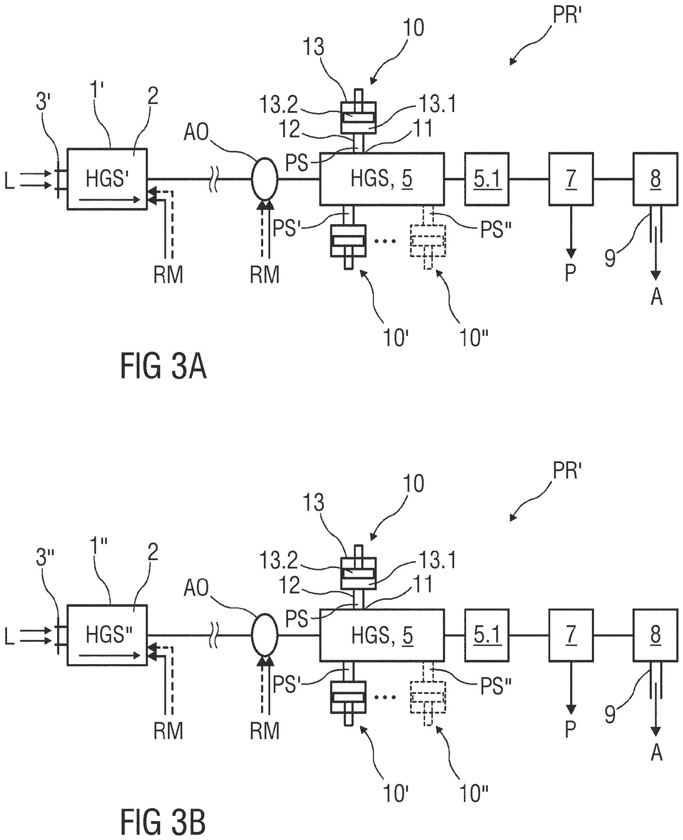

Figuren 3A und 3B zeigen schematisch verschiedene Ausführungsformen für einen Erzeuger 1` bzw. Erzeuger 1".

Figur 3A zeigt beispielsweise als einen weiteren Erzeuger 1' einen Wärmeübertrager 3`, welcher einen Heißgasstrom HGS' erzeugt. Dabei wird beispielsweise ein Luftstrom L, wie Umgebungsluft, dem Erzeuger 1' zugeführt und mittels des Wärmeübertragers 3' aufgeheizt.

Der Erzeuger 1' ist strömungsausgangsseitig mit dem Applikationsraum 2 verbunden. Der nicht pulsierende und mittels des Wärmeübertragers 3' aufgeheizte Luftstrom L wird als Heißgasstrom HGS` in den Applikationsraum 2 aufgegeben.

Figur 3B zeigt beispielsweise als einen weiteren alternativen Erzeuger 1" mindestens eine elektrische Heizung 3" oder mindestens eine elektrische Wärmequelle, welche einen nicht pulsierenden Heißgasstrom HGS" erzeugt. Dabei wird beispielsweise ein in dem Applikationsraum 2 vorhandener oder ein dem Erzeuger 1" zugeführter Luftstrom L, wie Umgebungsluft, mittels der mindestens einen elektrischen Heizung 3" aufgeheizt.

Der Erzeuger 1" ist mit dem Applikationsraum 2 gekoppelt, um den im Applikationsraum 2 vorhandenen Luftstrom L oder den dem Erzeuger 1" zugeführten Luftstrom L mittels der mindestens einen elektrischen Heizung 3" aufzuheizen. Der nicht pulsierende und im Applikationsraum 2 aufgeheizte Luftstrom L wird auch als Heißgasstrom HGS" bezeichnet. Alternativ kann der nicht pulsierende und mittels der elektrischen Heizung 3" aufgeheizte Luftstrom L in den Applikationsraum 2 aufgegeben werden.

Zur Erzeugung eines pulsierenden Heißgasstroms HGS aus den nicht pulsierenden Heißgasströmen HGS` oder HGS" des Erzeugers 1' bzw. 1" wird bzw. werden dann der eine oder die mehreren Pulsatoren 10, 10' oder 10" verwendet. Dabei wird dem jeweils erzeugten nicht pulsierenden Heißgasstrom HGS' bzw. HGS" stromab des Applikationsraums 2 mittels des mindestens einen Pulsators 10 eine Druckschwingung PS zur Erzeugung des pulsierenden Heißgasstroms HGS im Reaktionsraum 5 aufgeprägt. Diesem Pulsator 10 können weitere Pulsatoren 10' oder 10" nachgeschaltet sein, welche stromab dem pulsierenden Heißgasstrom HGS weitere Druckschwingungen PS` oder PS" im Reaktionsraum 5 zur Schwingungsverstärkung, Schwingungsdämpfung und/oder Schwingungsauslöschung aufprägen.

### BEZUGSZEICHENLISTE

- 1, 1', 1": Erzeuger
- 2: Applikationsraum
- 3: Zuführung
- 3': Wärmeübertrager
- 3": elektrische Heizung
- 5: Reaktionsraum
- 5.1: Reaktionsraum
- 5': Reaktionsraum
- 7: Abscheidevorrichtung
- 8: Abgasnachbehandlung
- 9: Kamin
- 10, 10', 10": Pulsator
- 13: Rohreinrichtung
- 12: Membran
- 13: Zylinder-Kolben-Einrichtung
- 13.1: Zylinder
- 13.2: Kolben
- A: Abgas
- AO: Aufgabeort
- BS: Brennstoff
- HGS: pulsierender Heißgasstrom
- HGS', HGS": Heißgasstrom
- L: Luftstrom
- P: Partikel
- PR: Vorrichtung
- PR`: Vorrichtung
- PS, PS', PS": Druckschwingung
- RM: Rohstoff
- VG: Verbrennungsgas

## Patentansprüche

1. Vorrichtung (PR, PR') zur thermischen Behandlung eines Rohstoffs (RM) in einem pulsierenden Heißgasstrom (HGS), umfassend:
- mindestens einen Erzeuger (1, 1', 1") des pulsierenden Heißgasstroms (HGS) und
- einen Applikationsraum (2) sowie
- einen in Strömungsrichtung nachfolgenden Reaktionsraum (5), in den der pulsierende Heißgasstrom (HGS) des Erzeugers (1, 1', 1") strömt,
wobei stromab des Applikationsraums mindestens ein Pulsator (10, 10', 10") vorgesehen ist, der von außen an den Reaktionsraum (5) gekoppelt ist und mindestens eine Druckschwingung (PS) dem pulsierenden Heißgasstrom (HGS) unter Ausbildung einer konstruktiven Interferenz im Reaktionsraum (5) aufprägt.

2. Vorrichtung (PR, PR') nach Anspruch 1, wobei
der Erzeuger (1) des pulsierenden Heißgasstroms (HGS) ein Brenner ist und der Applikationsraum (2) eine Brennkammer ist.

3. Vorrichtung (PR, PR') nach Anspruch 1, wobei der Erzeuger (1', 1") aus einem Wärmeübertrager (3') oder einer elektrischen Heizung (3") gebildet ist, der bzw. die strömungsausgangsseitig mit dem Applikationsraum (2) verbunden ist.

4. Vorrichtung (PR, PR') nach einem der vorhergehenden Ansprüche, wobei der Reaktionsraum (5) ein Resonanzrohr ist.

5. Vorrichtung (PR, PR') nach einem der vorhergehenden Ansprüche, wobei der Reaktionsraum (5) bereichsweise durch einen Stromausgangsbereich des Applikationsraums (2) gebildet ist.

6. Vorrichtung (PR, PR') nach einem der vorhergehenden Ansprüche, wobei der Pulsator (10, 10', 10") mittels einer Rohreinrichtung (11) mit dem Reaktionsraum (5) gekoppelt ist.

7. Vorrichtung (PR, PR') nach Anspruch 6, wobei die Rohreinrichtung (11) zumindest bereichsweise in den Reaktionsraum (5) hineinragt.

8. Vorrichtung (PR, PR') nach einem der vorhergehenden Ansprüche, wobei der Pulsator (10, 10', 10") als ein elektromechanischer Wandler zur Erzeugung der frequenzvariablen Druckschwingung (PS) ausgebildet ist.

9. Vorrichtung (PR, PR') nach einem der vorhergehenden Ansprüche, wobei der Pulsator (10, 10', 10") eingerichtet ist, Frequenz, Amplitude und/oder Phase der Druckschwingung (PS) zu variieren.

10. Vorrichtung (PR, PR') nach einem der vorhergehenden Ansprüche, wobei der Pulsator (10, 10`, 10") eine Membran (12) umfasst, die in einem Übergangsbereich zwischen Pulsator (10, 10', 10") und Reaktionsraum (5) angeordnet ist und von außen zu Schwingungen anregbar ist.

11. Vorrichtung (PR, PR') nach einem der vorhergehenden Ansprüche, wobei der Pulsator (10, 10', 10") eine Zylinder-Kolben-Einrichtung (13) umfasst.

12. Vorrichtung (PR, PR') nach einem der vorhergehenden Ansprüche 1 bis 9, wobei der Pulsator (10, 10', 10") als eine Verschlussblende ausgebildet ist, die von außen derart angesteuert wird, dass eine variable Druckschwingung (PS, PS', PS") dem pulsierenden Heißgasstrom (HGS) aufgeprägt wird.

13. Vorrichtung (PR, PR') nach einem der vorhergehenden Ansprüche, wobei mehrere Pulsatoren (10, 10', 10") an den Reaktionsraum (5) gekoppelt sind, mittels der weiteren Druckschwingungen (PS, PS', PS") in den Reaktionsraum (5) einkoppelbar sind.

14. Vorrichtung (PR, PR') nach Anspruch 13, wobei zumindest eine weitere Druckschwingung (PS', PS") mittels zumindest eines weiteren Pulsators (10', 10") unter Ausbildung zumindest einer weiteren konstruktiven Interferenz in den Reaktionsraum (5) einkoppelbar ist.

15. Vorrichtung (PR, PR') nach Anspruch 13 oder 14, wobei zumindest eine weitere Druckschwingung (PS', PS") mittels zumindest eines weiteren Pulsators (10', 10") unter Ausbildung einer destruktiven Interferenz in den Reaktionsraum (5) einkoppelbar ist.

## Claims

1. Apparatus (PR, PR') for thermal treatment of a raw material (RM) in a pulsing hot gas stream (HGS), comprising:
- at least one generator (1, 1', 1") of the pulsing hot gas stream (HGS) and
- an application space (2) and
- a downstream reaction space (5) into which the pulsing hot gas stream (HGS) from the generator (1, 1', 1") flows,
wherein provided downstream of the application space is at least one pulsator (10, 10', 10") which is externally coupled to the reaction space (5) and imparts at least one pressure oscillation (PS) on the pulsing hot gas stream (HGS) to form a constructive interference in the reaction space (5).

2. Apparatus (PR, PR') according to Claim 1, wherein the generator (1) of the pulsing hot gas stream (HGS) is a burner and the application space (2) is a combustion chamber.

3. Apparatus (PR, PR') according to Claim 1, wherein the generator (1', 1") is formed from a heat exchanger (3') or an electrical heating means (3") whose outflow is connected to the application space (2).

4. Apparatus (PR, PR') according to any of the preceding claims, wherein the reaction space (5) is a resonance tube.

5. Apparatus (PR, PR') according to any of the preceding claims, wherein the reaction space (5) is partly formed by an outflow region of the application space (2).

6. Apparatus (PR, PR') according to any of the preceding claims, wherein the pulsator (10, 10', 10") is coupled to the reaction space (5) by a pipe arrangement (11).

7. Apparatus (PR, PR') according to Claim 6, wherein the pipe arrangement (11) at least partially projects into the reaction space (5).

8. Apparatus (PR, PR') according to any of the preceding claims, wherein the pulsator (10, 10', 10") is configured as an electromechanical transducer for generating the frequency-variable pressure oscillation (PS).

9. Apparatus (PR, PR') according to any of the preceding claims, wherein the pulsator (10, 10', 10") is adapted for varying the frequency, amplitude and/or phase of the pressure oscillation (PS).

10. Apparatus (PR, PR') according to any of the preceding claims, wherein the pulsator (10, 10', 10") comprises a membrane (12) which is arranged in a transition region between the pulsator (10, 10', 10") and the reaction space (5) and is externally excitable to produce oscillations.

11. Apparatus (PR, PR') according to any of the preceding claims, wherein the pulsator (10, 10', 10") comprises a cylinder-piston arrangement (13).

12. Apparatus (PR, PR') according to any of the preceding Claims 1 to 9, wherein the pulsator (10, 10', 10") is configured as a shutter which is externally activated such that a variable pressure oscillation (PS, PS', PS") is imparted on the pulsing hot gas stream (HGS).

13. Apparatus (PR, PR') according to any of the preceding claims, wherein multiple pulsators (10, 10', 10"), by which further pressure oscillations (PS, PS', PS") are couplable into the reaction space (5), are coupled to the reaction space (5).

14. Apparatus (PR, PR') according to Claim 13, wherein at least one further pressure oscillation (PS', PS") is couplable into the reaction space (5) by means of at least one further pulsator (10', 10") to form at least one further constructive interference.

15. Apparatus (PR, PR') according to Claim 13 or 14, wherein at least one further pressure oscillation (PS', PS") is couplable into the reaction space (5) by means of at least one further pulsator (10, 10") to form a destructive interference.

## Revendications

1. Dispositif (PR, PR') de traitement thermique d'une matière première (RM) dans un courant de gaz chaud pulsé (HGS), comprenant :
- au moins un générateur (1, 1', 1") du courant de gaz chaud pulsé (HGS), et
- un espace d'application (2), et
- un espace de réaction (5) consécutif dans la direction d'écoulement et dans lequel entre le courant de gaz chaud pulsé (HGS) du générateur (1, 1', 1"), dans lequel en aval de l'espace d'application est prévu au moins un pulsateur (10, 10', 10") qui est couplé de l'extérieur à l'espace de réaction (5) et applique au moins une oscillation de pression (PS) au courant de gaz chaud pulsé (HGS) en réalisant une interférence constructive dans l'espace de réaction (5).

2. Dispositif (PR, PR') selon la revendication 1, dans lequel le générateur (1) du courant de gaz chaud pulsé (HGS) est un brûleur et l'espace d'application (2) est une chambre de combustion.

3. Dispositif (PR, PR') selon la revendication 1, dans lequel le générateur (1', 1") est formé par un échangeur de chaleur (3') ou un chauffage électrique (3") qui est relié à l'espace d'application (2) côté sortie d'écoulement.

4. Dispositif (PR, PR') selon l'une quelconque des revendications précédentes, dans lequel l'espace de réaction (5) est un tube de résonance.

5. Dispositif (PR, PR') selon l'une quelconque des revendications précédentes, dans lequel l'espace de réaction (5) est formé par endroits par une zone de sortie de courant de l'espace d'application (2).

6. Dispositif (PR, PR') selon l'une quelconque des revendications précédentes, dans lequel le pulsateur (10, 10', 10") est couplé à l'espace de réaction (5) au moyen d'un équipement à tube (11).

7. Dispositif (PR, PR') selon la revendication 6, dans lequel l'équipement à tube (11) fait saillie au moins par endroits dans l'espace de réaction (5).

8. Dispositif (PR, PR') selon l'une quelconque des revendications précédentes, dans lequel le pulsateur (10, 10', 10") est réalisé sous la forme d'un convertisseur électromécanique pour générer l'oscillation de pression (PS) à fréquence variable.

9. Dispositif (PR, PR') selon l'une quelconque des revendications précédentes, dans lequel le pulsateur (10, 10', 10") est conçu pour faire varier la fréquence, l'amplitude et/ou la phase de l'oscillation de pression (PS).

10. Dispositif (PR, PR') selon l'une quelconque des revendications précédentes, dans lequel le pulsateur (10, 10', 10") comprend une membrane (12) qui est disposée dans une zone de transition entre le pulsateur (10, 10', 10") et l'espace de réaction (5) et qui peut être excitée en oscillation de l'extérieur.

11. Dispositif (PR, PR') selon l'une quelconque des revendications précédentes, dans lequel le pulsateur (10, 10', 10") comprend un dispositif cylindre-piston (13).

12. Dispositif (PR, PR') selon l'une quelconque des revendications précédentes 1 à 9, dans lequel le pulsateur (10, 10', 10") est réalisé sous la forme d'un obturateur de fermeture qui est piloté de l'extérieur de telle sorte qu'une oscillation de pression variable (PS, PS', PS") est appliquée au courant de gaz chaud pulsé (HGS).

13. Dispositif (PR, PR') selon l'une quelconque des revendications précédentes, dans lequel plusieurs pulsateurs (10, 10', 10") sont couplés à l'espace de réaction (5), au moyen desquels des oscillations de pression supplémentaires (PS, PS', PS") peuvent être injectées dans l'espace de réaction (5).

14. Dispositif (PR, PR') selon la revendication 13, dans lequel au moins une oscillation de pression supplémentaire (PS', PS") peut être injectée au moyen d'au moins un pulsateur supplémentaire (10', 10") en réalisant au moins une interférence constructive supplémentaire dans l'espace de réaction (5).

15. Dispositif (PR, PR') selon la revendication 13 ou 14, dans lequel au moins une oscillation de pression supplémentaire (PS', PS") peut être injectée au moyen d'au moins un pulsateur supplémentaire (10', 10") en réalisant une interférence destructive dans l'espace de réaction (5).
